# EUROPEAN PATENT APPLICATION

(11) **EP 4 810 142 A1**
(43) Date of publication of application: **23.09.2026**
(21) Application number: 26164580.8
(22) Date of filing: 13.03.2026
(51) Int. Cl.: B01D 11/02, B01D 53/00, B01D 53/26, B01D 61/02, B01D 61/58, B09B 3/35, B09B 3/40, B09B 3/70, C02F 1/44, C05C 5/04, C05G 5/23, C22B 1/00, C22B 1/04, C22B 3/06, C22B 3/10, C22B 3/22, C22B 3/44, C22B 7/00, C22B 11/02, C22B 11/00, C22B 21/00, B01D 1/00, B01D 5/00, B01J 3/00, B01J 6/00, B09B 101/15, C02F 1/52, C02F 103/16, C05C 7/00, C09J 123/08

(54) **PYROLYTIC PROCESS FOR RECOVERING PRODUCTS FROM PHOTOVOLTAIC PANEL WAFERS**

(30) Priority: 18.03.2025 IT 202500005538
(71) Applicant: Consorzio per la Ricerca e la Dimostrazione sulle Energie Rinnovabili, 50038 Scarperia e San Piero (FI) (IT); Tialpi S.r.l., 13900 Biella (IT)
(72) Inventor: SALIMBENI, ANDREA, 50100 FIRENZE (IT); DI BIANCA, MARTA, 50100 FIRENZE (IT); CHIARAMONTI, DAVID, 50100 FIRENZE (IT); RAMON, LODOVICO, 13900 BIELLA (IT)
(74) Representative: Nesti, Antonio

(57) **Abstract**

Pyrolytic process for the recovery of products from a starting material composed of silicon wafers with residual layers of organic adhesive separated by photovoltaic panels,
comprising the following steps: fragmentation of the starting material, pyrolysis of the fragmented material, condensation of the extracted pyrolysis vapours and separation of an aqueous phase rich in acetic acid and an oil phase rich in fuel oil, separation of non-condensable pyrolysis gases, first leaching of pyrolysis solids with hydrochloric acid, resulting in a first leaching liquid containing aluminium and calcium and a first leaching solid containing silver, leaching of the solid of first leaching with nitric acid, obtaining a second leaching liquid rich in silver and a solid of second leaching rich in silicon.

## Description

### Field of the invention

The invention concerns the sector of thermochemical processes for the recovery and enhancement of products of potential interest from disposal material, in particular from silicon wafers resulting from the disposal of photovoltaic panels.

### State of the art

At present, processes that aim to enhance the products making up photovoltaic panels are widely known and used in numerous industrial sectors.

More specifically, the use of combined thermochemical processes of pyrolysis and leaching is well known, in which it is suggested to treat pyrolysis solids by leaching in order to separate the inorganic compounds present and extract products of economic and industrial interest.

Pyrolysis is a thermochemical process in which an organic material is degraded by heat in the absence or limited presence of oxygen and at operating temperatures usually between 300°C and 800°C.

The process leads to the formation of "char", i.e. a solid carbonaceous matrix, and pyrolysis gases, or pyrogases, which include both condensable vapours recoverable in the form of pyrolysis oil, composed of water, tar and other organic compounds, and a fraction of permanent gases, i.e. a mixture of different species, including hydrogen, carbon dioxide, carbon monoxide and methane. The proportion with which these three fractions are produced during the process varies according to the operating conditions selected.

Slow pyrolysis, also known as carbonization, is characterized by temperatures typically between 400°C and 600°C, long residence times of the material (sometimes more than 2 hours) and low heating rates (the rate at which the material is heated, less than 30°C/min), and is aimed at the production of char. Pyrogases are typically burned to provide a portion of the process heat, which is influenced, among other things, by the moisture of the incoming material or "feedstock".

In the specific sector of the recovery of photovoltaic panels destined for disposal, several solutions based on pyrolysis treatments for the recovery of panel components are known.

In these solutions, the photovoltaic panels are treated together with the plastic back panel and the front protective glass, complete or partial, and are subjected to a thermochemical process of pyrolysis and subsequent leaching in order to recover the products of potential interest.

However, the solutions known to date have been unsatisfactory, for three main reasons:
(i) the fluorine and chlorine present in the polymer constituting the backsheet, contaminate the process gases and liquids with polluting compounds, making the process polluting and the pyrolysis products not very reusable,
(ii) PET, or PVFD, is only partially degraded during pyrolysis; For this reason, a fraction of carbonaceous powder (CHAR) remains in the pyrolyzed solid, which limits and/or complicates the recovery of silicon downstream of the process,
(iii) the processing of glass-inclusive panels leads to various problems, including: a reduction in the energy efficiency of the pyrolysis process (in addition to the energy required for the degradation of the polymer, there is also energy to heat the glass, which is inert to the process), the reduction of the value of the solid, whose concentration of silicon metal is reduced, and higher plant and management costs related to the consistent presence of glass in the subsequent phases of solid treatment, such as screening and chemical leaching.

In the sector, there are also well-known solutions that involve the disassembly of the panels to send the various components separately for recycling or reuse and which include the treatment by pyrolysis of the organic components of the panels, in particular the organic EVA adhesive film used to join the silicon wafers to the backsheet and the glass.

For example, a method for the recovery of all the components of crystalline silicon photovoltaic modules and glass sheets through a process that involves the disassembly of the panels and their differentiated treatment based on the presence or absence of the glass layer downstream of disassembly by means of low-temperature pyrolysis or microwave treatments has been known for CN114833176.

However, the method is complex, makes use of different processes and plants, and does not achieve complete recovery of panel components.

A method of recycling silicon-based photovoltaic modules has also been known for CN115921494 in which the photovoltaic modules are first disassembled by separating metal structures and joints from the multilayer panels. Subsequently, the multilayer panels are pyrolyzed at a relatively low temperature of 200°C-350°C for the purpose of partially pyrolyzing and peeling off the EVA adhesive of the panels. The pyrolysis gas thus obtained can be condensed to obtain a mixed mixture of carbon dioxide and argon (used to keep the atmosphere inert in the plant) and an acetic acid liquid while, thanks to the low temperature of the preliminary pyrolysis, the detachment for recycling of silicon wafers, backsheets and glass sheets deprived of EVA residues without generating fluorine-containing gases is facilitated.

However, due to the low temperatures, only part of the EVA is degraded in the first step. For this purpose, a second step is necessary to complete the degradation of the residual EVA.

The application of two pyrolysis steps, as suggested by CN115921494, has the disadvantage of significantly complicating the plant solution, while the use of an inert gas such as argon limits the energy valorization of the gaseous phase obtained from the process because it requires higher temperatures to obtain a satisfactory devolatilization of the EVA, increasing operating costs.

Also for CN114871237 a process has been known to thermally deconstruct photovoltaic panels and subsequently treat the residues of EVA films by pyrolysis and leaching and send the glass sheets and wafers for recycling.

However, such systems focus on the treatment of organic EVA residues and do not address the issue of recovering economically valuable products from silicon wafers intended for disposal.

The currently available technology therefore has significant limitations for the recovery of materials of industrial and economic value from silicon wafers destined for disposal. In order to purify the silicon contained in the ashes from pyrolysis of photovoltaic panels, numerous solutions that include chemical leaching processes are known.

For example, a process for treating photovoltaic panels has been known for CN114871237 that involves a pre-disassembly from the panels of junction boxes and frames and then a heat treatment of the photovoltaic panel obtained by preheating and pyrolysis to obtain pyrolysis gases and pyrolysis residues used to obtain combustible gases.

The silicon wafers are then recycled, and the pyrolysis ash is subjected to oxidative acid leaching for metal recovery.

However, these systems focus on the treatment of pyrolysis residues and the recycling of wafers separated from other components and do not address the problem of treating silicon wafers for disposal in order to recover wafer component metals. In particular, the technologies which are proposed at this date mainly aim at the purification, by leaching, of the silicon present in the pyrolysis residue, neglecting the selective valorization of the different metals that make up the wafer, including silver and aluminum.

The currently available technology therefore has significant limitations for the recovery of valuable metals as secondary raw materials at levels of purity sufficient to be of industrial and economic interest

The state of the art therefore shows the need to have a complete recovery process of photovoltaic wafers destined for disposal with high energy efficiency, reduced costs and the possibility of obtaining a high quality of the products deriving from the process, an aspect that makes the processes currently available unattractive from an economic and industrial point of view

The state of the art therefore shows the need to have a photovoltaic wafer recovery process with high energy efficiency, reduced costs and the possibility of obtaining a high quality of the products deriving from the pyrolytic process, an aspect that makes the processes currently available unattractive from an economic and industrial point of view.

### Purpose of the invention

In view of the limitations present at the state of the art, it is a first purpose of the present invention to propose a pyrolytic recovery process of silicon wafers of photovoltaic panels that is at the same time highly efficient both from an energy point of view and in terms of obtaining both a solid free of residual plastic, and pyrolysis products with high economic value and reusable in industry.

Moreover, in respect to the state-of-the-art limitations regarding the leaching of photovoltaic wafers, it is one of the aims of the present invention to propose an integrated process of pyrolysis, leaching and electrochemical recovery by means of electrolytic refining "electrowinning" for the selective recovery of products such as aluminum, copper, silver and silicon from wafers of photovoltaic panels previously deprived of glass and polymers, for example through pyrolysis or mechanical separation, which allows metals to be recovered in the form of products with high purity and high economic value.

A further purpose is to minimize waste and to recover products that can be used in industry such as flocculants and fertilizers from the overall process.

### Summary of the invention

This was achieved by implementing a process according to one or more of the attached claims, in which the wafers of the photovoltaic panels are separated from both the protective glass layer and the plastic backsheet mechanically or through a different technology of removal of the glass and backsheet such as shredding, cryogenic separation, or by supercritical CO2. Due to the greater adhesion to the metal surface of the wafers compared to the surfaces of the glass and the plastic backsheet, the organic adhesive film (EVA), or part of it, will still remain downstream of the removal on the separated wafers, which together with the silicon layer makes up the starting material of the process. The wafers obtained, including EVA, are therefore preferably subjected to shredding and subsequently to a slow pyrolysis process in a single stage at temperatures between 500 and 650 °C with heating rates between 10 and 40 °C / min and maintained at pyrolysis temperature for a residence time between 0.1 h and 1 h. The process can include a condensation section of the pyrolysis gases, including a final step of filtration and removal of moisture from the permanent gases and develops in an anoxic atmosphere obtained, for example, by keeping the pyrolysis reactor in vacuum thanks to the process gas suction system and by arranging two valves at the inlet and exhaust.

Downstream of pyrolysis, a screen can be provided to separate any strips present in the wafers, i.e. the conductive elements of the photovoltaic panel from the pyrolysis solid of the processed wafers.

The recovery of metals is obtained by a process according to which the pyrolysis solid is treated in a first stage of leaching with hydrochloric acid at temperatures < 70°C and solid:liquid concentrations between 1:2 and 1:5, with the obtaining of a liquid containing aluminum and iron chloride, and a leaching solid in turn subjected to a second stage of leaching with nitric acid with the obtaining of a silver-rich leaching liquid, which is extracted by an electrochemical recovery treatment or electrowinning. After this phase, the liquid deriving from electrochemical recovery, composed mainly of HNO3, is precipitated by an alkaline reagent such as Ca(OH)2 up to pH > 5.5. The precipitate is mechanically separated, while the liquid, purified of heavy metals, is subsequently osmotized. From the osmosis, demineralized water and a concentrated fertilizer containing mainly calcium nitrate are recovered.

For the purposes of this invention, it is understood that silver-rich means a solid with a silver weight percentage between 0.3 and 2, and aluminum-rich means a solid with an aluminum weight percentage between 0.5 and 2.

In this case, the integrated process therefore obtains, as final products: Silicon metal powder, Metallic silver on copper plate, flocculant based on aluminum chloride, liquid fertilizer based on calcium nitrate, separated strips, aqueous pyrolysis phase rich in acetic acid and an oil phase and non-condensable pyrolysis gas.

In a preferred example of implementation, the process involves the pyrolysis plant being electrically powered by a cogenerator for the production of electricity from the permanent gases obtained from the process itself.

Compared to the pyrolysis solution, a first advantage, in fact, consists in the fact that, by processing wafers without the backsheet, the process makes it possible to obtain with a single process step as resulting products a pyrolysis solid rich in silicon and almost free of carbon residue (<0.5%), an aqueous phase rich in acetic acid (20 % w/w approx.), biofuel oil and non-condensable gases with a high amount of chemical energy convertible into electrical energy which makes the process potentially net producer of electricity.

A second advantage is that the pyrolysis process was very efficient in devolatilising the injected organic material (EVA), exceeding 99 %, allowing the production of a pyrolysis solid almost completely composed of mineral matter and therefore not contaminated by carbon.

A further advantage is that, thanks to the devolatilization of EVA, the process allows any strips to be easily separated from the metal powder, and then selectively recoverable.

A further advantage is that the composition of the aqueous phase was found to have an acetic acid content in the order of 20% as it is with a minimum amount of inorganics, thus allowing the pyrolysis water to be used in commercial applications, for example as a reagent in the biological section of wastewater treatment plants.

A further advantage consists in the fact that, with a simple gravimetric separation from the total liquid, the oil, or oil fraction obtained, was mainly composed of C7-C19 hydrocarbons, possessing a high calorific value (> 42 MJ/kg), and a negligible concentration of inorganics and extremely low water content (<0.4%), allowing the installation of a simple single-stage condenser, followed by separation units, and allowing the use of oil as a Recycled Carbon Fuel.

A further advantage is that, by avoiding the blowing of inert gases and applying a condensation of the condensable fraction of pyrogases at reduced temperatures, the permanent gases are purified of contaminants and with a high calorific value (> 30 MJ/kg), characteristics that allow them to be used as a gaseous fuel in a cogenerator, minimizing the environmental impact of the process.

Compared to the chemical leaching solution, a first advantage consists in the fact that the process allows the selective recovery of metals of economic interest such as Silver and Aluminum from silicon wafers of photovoltaic panels destined for disposal.

A second advantage is that the liquid obtained downstream of the first leaching was effective as a flocculating agent, for example in waste water.

A further advantage is that, thanks to selective leaching and the use of a specific additive, 99.3% of Silver was recovered from the electrowinning process with a residence time of less than 15 minutes.

A further advantage consists in the fact that the final liquid phase obtained downstream of the precipitation process and then osmotization of the liquid was effective as a fertilizer, usable in agriculture.

A further advantage is that by osmotizing the process liquid after electrowinning, as well as the wash water, it is possible to recover the water in the process itself and minimize the consumption of water resources.

### List of drawings

These and other advantages will be better understood by each technician in the branch from the description below and from the attached drawings, given as a non-limiting example, in which:
- fig.1 shows a schematic of a preferred form of a reactor for the implementation of the process of the invention powered by silicon wafers separated from glass and backsheets of photovoltaic panels, with residual layers of organic EVA adhesive;
- Fig.2 schematically shows a preferred example of the implementation of a process according to the invention;
- Figures 3a, 3b show respectively the front and back surface of a silicon wafer with residual layers of EVA remaining from the separation of the wafer from glass and backsheet of a photovoltaic panel;
- Fig.4 and 5 show the composition of the aqueous and oily phases obtained in an example of process implementation.

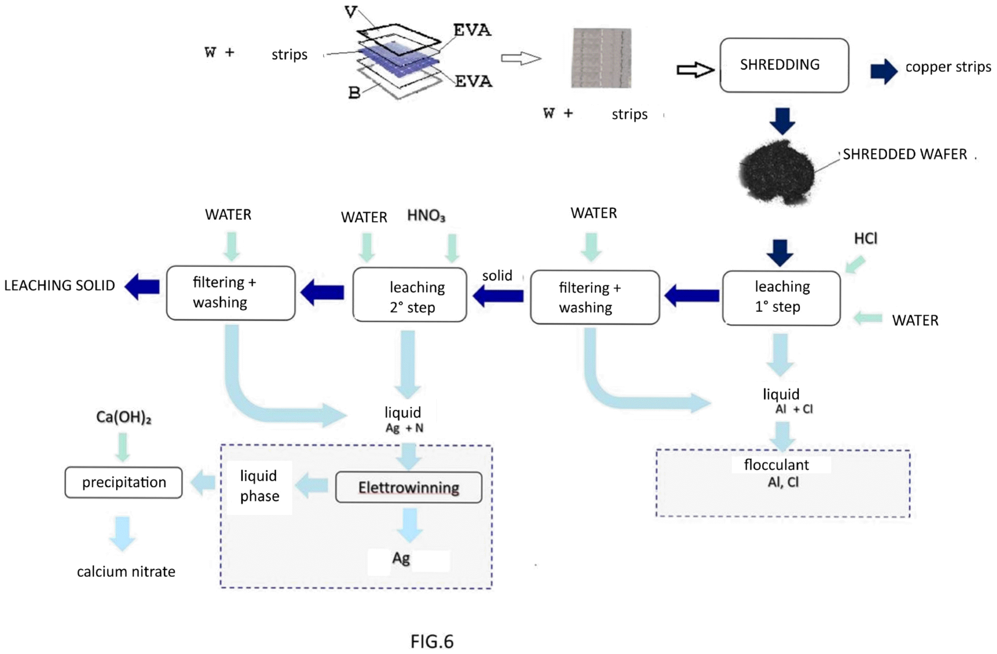

- Fig.6 shows a schematic of a preferred form of an invention process powered by silicon wafers of shredded photovoltaic panels.

### Detailed Description

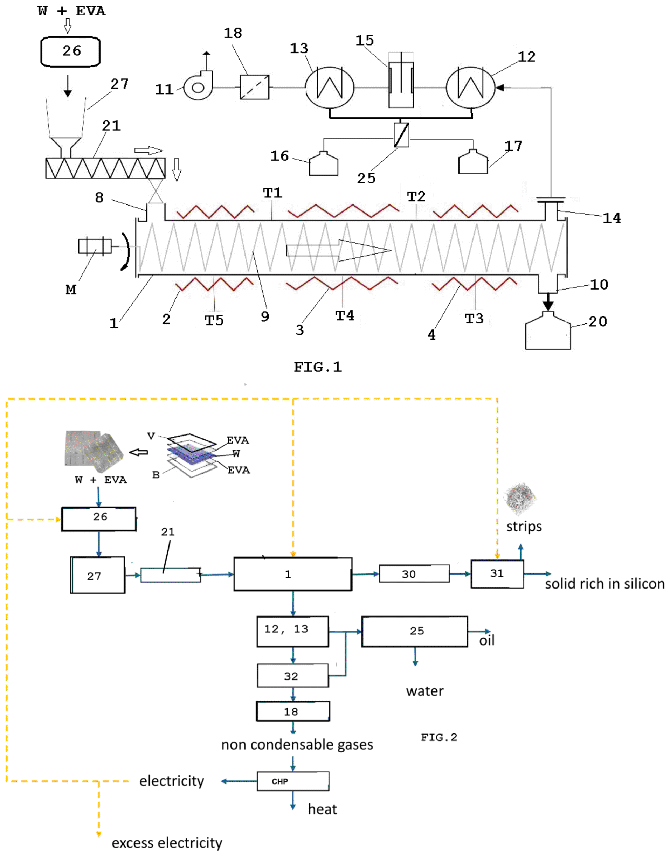

With reference to the drawings, a preferred form of implementation of a pyrolytic process for the recovery of silicon wafers obtained from photovoltaic panels intended for disposal and composed of one or more layers W of silicon wafers between a support panel or backsheet B and an upper protection glass V joined to the wafer by organic adhesive films is described, constituted, for example, by layers of EVA, according to the diagram shown in fig.2.

In the process of the invention, the starting material, or feedstock intended for pyrolysis includes silicon wafers and EVA organic adhesive film residues, as well as possibly the strips or conductive elements of the panel, and is obtained after preliminary disassembly of the photovoltaic panels and separation of the silicon wafers from the support layer and protective glass as well as, possibly by additional components such as support frames and junction boxes.

Preferably the disassembly takes place mechanically, but it is understood that alternative methods can be used to isolate the wafer from the other components of the panels and obtain a material to be introduced into the reactor.

With reference to the drawings, a preferred form of implementation of a process according to the invention is described, in which the shredded pyrolysis solid is subsequently subjected to a two-stage leaching process, a first stage of which with hydrochloric acid as a reagent in order to remove mainly the aluminum contained in the solid, as well as iron and other heavy metals, and a second, conducted on the leaching solid obtained downstream of the first stage, with nitric acid to remove the silver contained in the solid obtained downstream of the first leaching.

The liquid phase coming out of the first leaching stage consists of a liquid containing high concentrations of aluminium chloride and other metals, which has been shown to be efficient as a flocculant in wastewater treatment. In contrast, the solid from the first stage of leaching still contains more than 95% of the initial silver.

According to the invention, the liquid phase coming out of the second stage of leaching is subjected to electrochemical recovery (electrowinning) of the silver contained in order to recover the silver contained.

Advantageously, the end-of-process liquid phase downstream of the electrochemical recovery of silver is further treated by chemical precipitation with, for example, Ca(OH)2, in order to purify the liquid from dissolved metals.

In more detail, in an example of process implementation, the composition of the starting material has the following values, expressed as a percentage of dry matter

| **Parameter** | **Value** | **Units** |
|---|---|---|
| Inert solid | 51.2 | % s.s. |
| Birds | 48.8 | % s.s. |
| Total Carbon (C) | 43.9 | % s.s. |
| Total hydrogen (H) | 6.9 | % s.s. |
| Total nitrogen (N) | 0.1 | % s.s. |

As far as the metal component is concerned, the resulting composition is as follows, expressed as weight in mg per kg of dry matter (s.s).

| **Metal** | **Value** | **Units** |
|---|---|---|
| Ag | 1502 | mg/kg d.s. |
| To the | 6359 | mg/kg d.s. |
| Approx | 3700 | mg/kg d.s. |
| Cr | 7 | mg/kg d.s. |
| Cu | (*) | mg/kg d.s. |
| Fe | 78 | mg/kg d.s. |
| K | 14 | mg/kg d.s. |
| Mg | 1523 | mg/kg d.s. |
| Na | 6423 | mg/kg d.s. |
| Ni | (*). | mg/kg d.s. |
| Pb | 57 | mg/kg d.s. |
| Yes | 321664 | mg/kg d.s. |
| Zn | 105 | mg/kg d.s. |
| Ag | 1502 | mg/kg d.s. |

| | | |
|---|---|---|
| (*) not detectable except in any strips present | | |

In the form of implementation described, the process involves fragmenting the starting material W + EVA, e.g. grinding in a mill 26 until it reaches a size preferably less than 8 mm.

Downstream of fragmentation, a controlled amount of starting material is then fed into the process chamber of a pyrolytic reactor 1 comprising one or more heating sections 2-4, in an anoxic atmosphere, inside process chamber 5.

Preferably the reactor is of the electrically heated type and may include for this purpose an electric heating apparatus equipped, for example, with resistors 6 arranged around the casing 7 of the process chamber 5.

The heating of the reactor is regulated to heat the process chamber to controlled pyrolysis temperatures and in particular to implement a slow pyrolysis process whose temperature in the last heating section will be maintained between 450°C and 650°C, with heating rates between 10 and 40 °C/min and a wafer residence time in the process chamber between 0.1 h and 1 h.

The pyrolysis reactor used can be of different types known in the sector, in the example illustrated it is a cylindrical reactor equipped with an inlet 8 of the material to be treated which is moved by a feeder 21, for example a horizontal screw fed by a hopper 27 and advanced towards an outlet 10 of the solid pyrolysis or char material by a rotating screw 9 moved by an M motor and arranged inside the reactor process chamber through three independent heating sections 2-4 arranged along the main axis of the reactor and whose drive is controlled thanks to a distribution of T1-T5 thermocouples that allow the temperature value in the various sections to be monitored and regulated independently.

In particular, in a preferred form of implementation of the process, the temperature of the first section 2 was maintained at a value of 200°C, the temperature of the second section 3 was maintained at a value of 400°C and the temperature of the third section 4 was maintained at a value of 600°C, with a total residence time of 60 minutes. Advantageously, it was found that a pyrolysis temperature of 550-600 °C guarantees the devolatilization of the organic matter present in the silicon wafers and at the same time the distribution of the temperatures, lower in the initial section in contact with the feed of the treated material, made it possible to avoid the melting of the processed wafer in the feeding screw.

Nitrogen is also blown inside the reactor to keep the process inert and the process chamber is kept in an anoxic atmosphere by means of a slight depression obtained through a fan 11 which allows the extraction of pyrogases composed of condensable gases and vapors and non-condensable gases.

In the example described, for the recovery of the liquid phases, the plant provides a condensing system consisting of two surface exchangers 12, 13 in which the pyrogases coming from an outlet 14 of the reactor are cooled, allowing the condensation, for example in a surface condenser or in direct contact, of the aqueous phase and the organic fraction present in the pyrogases which are then separated by a separator 25 (e.g. a centrifugal decanter) arranged downstream and collected in their respective tanks 16, 17. An electrostatic precipitator 15 can also be placed between the two condenser for the removal of particulate matter and aerosols.

A filter 18 (demister) consisting of metal wool and cotton, for example, can be placed before the fan, which removes any condensate droplets present in the pyrolysis gas stream.

At the end of the process, the pyrolysis of the starting material produces a silicon-rich pyrolysis solid collected in a tank 20 preferably by passing through a cooled transport screw 30 and a sieve 31, an aqueous phase rich in acetic acid and an oil phase of the pyrolysis oil or bio-oil which are collected in the respective tanks 16, 17 shown in fig.1 and a flow of non-condensable gases extracted downstream of the condensing system from the extraction fan 11 possibly cooled by a cooler or chiller 32.

Advantageously, the products obtained with the process are of economic interest and can be reused in industry directly or as material for further processes and processing.

The process has also proven to be highly energy efficient and allows the chemical energy of the pyrolysis gases to be recovered to feed an energy recovery plant, in the example illustrated in fig.2 a CHP cogenerator with an internal combustion engine, used for the combustion of non-condensable gases and the production of thermal energy and a sufficient amount of electricity to power the entire pyrolysis process including mechanical phases handling, wafer grinding, etc...

### Implementation example

The advantages indicated have been verified in the example below in which the process was conducted for the continuous treatment of 120kg/h of wafers with ground and screened EVA residues.

The process showed significant advantages in the quality of pyrolysis products for industrial reuse.

In particular, the char or pyrolysis solid obtained was found to be almost completely composed of mineral matter, showing the effectiveness of the pyrolysis process in the devolatilization of organic material.

The table shows the composition of char which highlights the irrelevant content of organics and the zero value of the chemical energy possessed.

| Parameter | Value | Units |
|---|---|---|
| Humidity | 0.0 | % |
| Inert solid | 99.5 | % d.b |
| Total Carbon (C) | 0.5 | % d.b |
| Total hydrogen (H) | 0.0 | % d.b |
| Total nitrogen (N) | 0.0 | % d.b |
| Total sulfur (S) | 0.0 | % d.b |
| Chlorine (Cl) | 0.0 | % d.b |
| Higher Calorific Value (HHV) | 0.05 | MJ/kg d.b. |

As regards the aqueous phase collected in tank 16, it was equal to about 24% of the total pyrolysis oil, while the separated oil phase represents the remaining 76% and is composed almost entirely of organic matter,

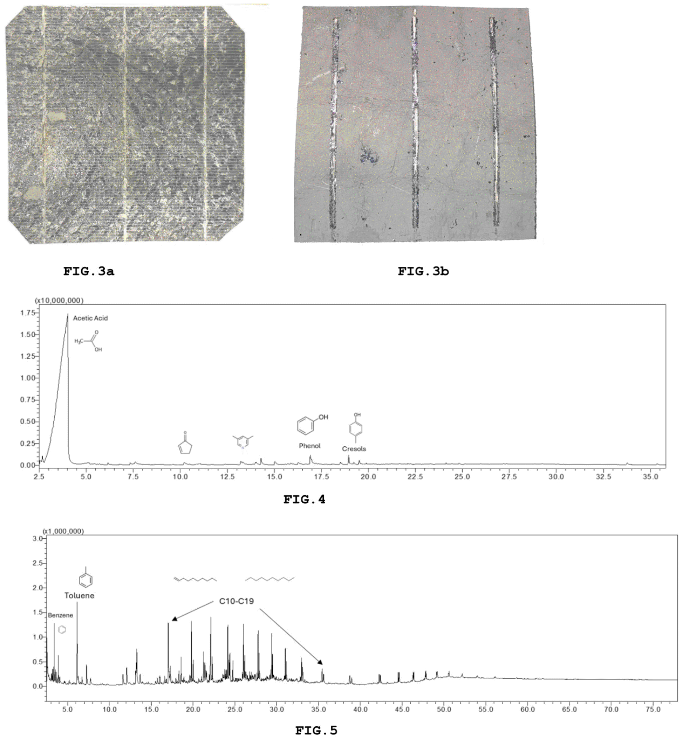

Advantageously, the aqueous phase, as visible from the composition shown in fig.4, has been found to have a high concentration of acetic acid in the order of 20% as it is and a reduced quantity of inorganics, which allows the commercial application of the liquid produced, for example as a reagent in the biological section of wastewater treatment plants.

In addition, the oily fraction, as can be seen from the composition shown in fig.5, was found to have a high calorific value, and an extremely low concentration of water, thus being able to be used, as a fuel, for example as a recycled carbon fuel (Recycled Carbon Fuel).

The composition of the non-condensable gases obtained from the pyrolysis process was as follows, expressed as an average percentage of mass value, with the respective higher calorific value expressed in MJ/Kg.

| **Gas** | **Value** | **Units** |
|---|---|---|
| H2 | 0.7 | % m/m |
| 02 | 0.0 | % m/m |
| N2 | 1.5 | % m/m |
| CH4 | 11.9 | % m/m |
| CO | 8.7 | % m/m |
| CO2 | 26.4 | % m/m |
| C2H4 | 19.0 | % m/m |
| C2H6 | 8.9 | % m/m |
| C2H2 | 0.0 | % m/m |
| H2S | 0.0 | % m/m |
| C3H8 | 22.9 | % m/m |
| iC4 | 0.0 | % m/m |
| nC4 | 0.0 | % m/m |
| Gas density | 1.4 | kg/Nm3 |
| HHV | 34.1 | MJ/kg |

With the process conditions described, the energy balance was positive with a significant excess of energy resulting from the difference between the electrical energy absorbed in the mechanical phases of grinding, screening, handling and in the pyrolysis phase and auxiliary parts equal to about 85kWe, and the electrical (146kWe) and thermal (193kWt) energy produced by the cogenerator.

The total chemical energy fed into the reactor in the form of silicon + EVA wafers was recovered for 99% in the form of pyrogas, distributed for about 34.7% in the pyrolysis condensates and for about 63.6% in the non-condensable gases as shown in the following table showing the overall energy balance of the process.

| **Material** | **HHV (MJ/kg)** | **Chemical Power Distribution** |
|---|---|---|
| Silicon Wafers | 19.6 | 100% |
| Pyrolyzed Solid | 0.0 | 1% |
| Condensate (pyrolysis oil) | 34.4 | 34.7 % |
| Non-condensable gases | 34.1 | 63.6% |
| Not recovered | - | 0.6 % |

Where, for the measurement of the energy of the pyrolysis products, both the chemical energy deriving from the higher calorific value of each product (solid, water, oil, gas) and the thermal energy in the form of sensible heat of the three products and latent heat of the condensates were considered, and for the energy present in the input material, the calorific value of the material was calculated.

The metal content of the pyrolysis solid is also shown below, where the efficiency of copper extraction during the shredding phase can be seen.

| **Metallo** | **Valore** | **Unità** |
|---|---|---|
| **Ag** | **3642** | **mg/kg s.s.** |
| **Al** | **10816** | **mg/kg s.s.** |
| **Ca** | **13269** | **mg/kg s.s.** |
| **Cr** | **26** | **mg/kg s.s.** |
| **Cu** | **299** | **mg/kg s.s.** |
| **Fe** | **1170** | **mg/kg s.s.** |
| **K** | **429** | **mg/kg s.s.** |
| **Mg** | **3763** | **mg/kg s.s.** |
| **Na** | **24144** | **mg/kg s.s.** |
| **Ni** | **b.d.l.** | **mg/kg s.s.** |
| **Pb** | **423** | **mg/kg s.s.** |
| **Si** | **736119** | **mg/kg s.s.** |
| **Zn** | **86** | **mg/kg s.s.** |

| | | |
|---|---|---|
| s.s - dry subtance; b.d.l - below detection limit Note: 10000 mg/kg ▪ 1% | | |

The pyrolysis solid obtained was then subjected to the first leaching stage using only HCl in a concentration of 7.2 % and a liquid (water)/solid ratio of 5:1 as a reagent, obtaining an acid/solid ratio of 36 %. Leaching was also conducted at a controlled temperature of 60 °C with a contact time of one hour.

However, it was found that satisfactory results can be achieved with an acid-to-solid ratio of 20 to 50 % and a liquid-to-solid ratio of 1:2 to 1:5 with leaching temperatures of 30 to 60 °C and contact times of 20 to 60 minutes.

At the end of the first leaching stage, the liquid and solid phases were separated, and the solid phase was washed at 60° in water with a 5:1 liquid/solid ratio and then filtration with separation of the liquid washing phase and mixing the washing liquids with the liquid leaching phase.

More specifically, the concentration of Al in the first leaching liquid was found to be 2000 mg/l and that of silver to 27mg/l, confirming the effectiveness of the first leaching stage in order not to substantially alter the silver content and the selective extraction of aluminium.

As a result of the leaching in hydrochloric acid, the liquid phase obtained downstream of the first leaching stage was also rich in Aluminium and Chlorine and was advantageously effective as a flocculating agent, for example in wastewater treatment. In particular, flocculation tests were carried out by dosing the first leaching liquid as a flocculant for the treatment of a liquid deriving from anaerobic digestion of maize silage with a COD concentration of 997 mg/lt.

In the test, a total of 23.5 g/lt of liquid was dosed in the effluent to be treated, and the resulting liquid had a COD content of 160 mg/ml, demonstrating an efficacy of the liquid as a flocculant substantially in line with the commercial products available.

The first leaching solid obtained was then subjected to a second leaching stage performed in water and nitric acid as a reagent in a concentration of 13% by weight, with a solid/liquid ratio of 5:1, a reactant/solid ratio of 65%, for a contact time of 1 hour and a leaching temperature of 65°C.

However, it was found that satisfactory results can be achieved with an acid-to-solid ratio of 40 to 70 % and a liquid-to-solid ratio of 3:1 to 10:1 with leaching temperatures of 50 to 70 °C and contact times of 30 to 90 minutes.

At the end of the second leaching stage, the liquid and solid phases were separated, and the solid phase was washed at 65° in water and then filtered with separation of the liquid washing phase and mixing the washing liquid with the liquid phase of the second leaching. As a result of the second stage of leaching in nitric acid, the liquid phase obtained downstream was rich in silver and nitrogen.

More specifically, the concentration of Ag in the second leaching liquid was 496 mg/l and that of aluminium was 5mg/l, confirming the effectiveness of the selective extraction of aluminium performed in the first stage of leaching and of the extraction of silver in the second stage of leaching.

The second leaching stage also produced a final solid whose composition, compared with the starting shredded wafer, confirmed the effectiveness of the extraction of aluminum and silver and a substantial invariance with respect to calcium, sodium and magnesium, with an increased concentration of silicon as an element in the final solid, consistent with the reduction of silver and aluminum in the final solid.

In the example described, the electrowinning phase on the second leaching liquid was carried out by means of a continuous recovery cell consisting of anodic and cathode plates in copper sponge, in which the recovery cell is connected to a storage tank for the second leaching liquid added with conductive salts so that at the end of the cycle it is possible to remove the cathodes on which the recovered silver will have been deposited.

In this example of implementation, the electrowinning phase made it possible to recover almost all (99.3%) of the silver present in the liquid in about 15 minutes.

The end-of-process liquid phase downstream of the electrochemical recovery of the silver was then further treated by chemical precipitation with 3.43g of Ca(OH)2, per 100 ml.

The centrifugal separation therefore produced a solid precipitate and a liquid phase substantially free of metals such as Pb Cr, Fe, Zn, and rich in calcium nitrate and nitrogen which was effectively usable as a liquid soil improver.

The invention has numerous economic and industrial advantages.

In particular, thanks to the invention process, it has been possible to substantially enhance the components of silicon wafers destined for disposal, extracting materials of direct economic interest, such as silver, but also obtaining secondary process products that can be reused in industry such as fertilizers and flocculating agents, thus minimizing the amount of waste material not recovered.

## Claims

1. A pyrolytic process for the recovery of products from a starting material composed of silicon wafers with residual layers of organic adhesive separated by photovoltaic panels,
comprising the following steps:
fragmentation of the starting material,
feeding a quantity of fragmented starting material into the process chamber of a pyrolytic reactor comprising one or more heated process sections,
maintenance of the process chamber in an anoxic atmosphere by extraction of the gases developed by the process,
heating of the process chamber to a pyrolysis temperature of 500°C to 650°C, with heating rates of 10°C to 40°C/min,
keeping the starting material at said pyrolysis temperature for a time between 0.1h and 1 h until the residual organic adhesive has essentially completely evaporated,
extraction of pyrolysis vapours and gases from the process chamber by suction,
condensation of the extracted pyrolysis vapours,
separation and collection of an acetic acid-rich aqueous phase from condensed pyrolysis vapours,
separation and collection from condensed pyrolysis vapours of an oil phase rich in fuel oil,
extraction of silicon-rich pyrolysis solid products from the chamber,
separation of non-condensable pyrolysis gases from these vapours and extracted pyrolysis gases,
subject the solid pyrolysis products to a first stage of leaching with hydrochloric acid, resulting in a first leaching liquid containing aluminium and calcium and a first leaching solid containing silver,
subject said first leaching solid to a second stage of nitric acid leaching, resulting in a second leaching liquid rich in silver and a second leaching solid rich in silicon.

2. Process according to claim 1, including an electrochemical recovery step of the silver contained in said second leaching liquid.

3. Process according to claim 2, in which said electrochemical recovery step is performed by electrowinning with silver recovery by deposition on a copper plate and obtaining an end-of-process acid liquid phase containing nitric acid and metals in solution.

4. Process according to claim 3, including the following steps
subject said end-of-process liquid phase containing nitric acid and metals in solution to precipitation with an alkaline reagent up to pH>5, resulting in a solid salt containing heavy metals and a liquid containing calcium nitrate,
concentrate the liquid containing calcium nitrate by nano-filtration and/or reverse osmosis for nitrate concentration and water recycling in the leaching process.

5. Process according to one of the previous claims, in which said first stage of leaching is carried out
in water and hydrochloric acid as a reagent in an acid-to-solid ratio of 20% to 50% by weight, preferably 36% by weight,
with a solid/liquid weight ratio of 1:2 to 1:5, preferably 1:5,
for a contact time of between 20 and 60 minutes, preferably 60 minutes, and
at a first leaching temperature between 30 and 60°C, preferably 60°C.

6. Process according to one of the previous claims, including
a washing phase in water of said first leaching solid at a first wash temperature between 20°C and 60°C, preferably equal to 60°C, resulting in a first wash liquid and a washed first leaching solid, and
a phase of mixing the first washing liquid with said first leaching liquid.

7. Process according to one of the previous claims, in which said second stage of leaching is carried out
in water and nitric acid as a reagent in an acid/solid ratio of between 40% and 70% by weight, preferably 65% by weight,
with a liquid/solid weight ratio of 3:1 to 10:1 preferably 5:1,
for a contact time of between 30 and 90 minutes, preferably 60 minutes, and,
at a second leaching temperature between 50°C and 70°C, preferably 65°C.

8. Process according to one of the previous claims, including
a washing phase in water of said second leaching solid at a second wash temperature between 20°C and 70°C, preferably equal to 65°C, resulting in a second wash liquid and a washed second leaching solid, and
a phase of mixing the first wash liquid with said washed second leaching liquid.

9. Process according to one of the previous claims, including a phase of mixing with calcium hydroxide of said liquid phase at the end of the process and separation by precipitation of a solid containing residual metals and a liquid phase rich in calcium nitrate.

10. Process according to one of the previous claims, including a phase of separation of copper from the shredded starting material.

11. Process according to one of the previous claims, in which this phase of separation of non-condensable gases is carried out by cooling.

12. Process according to one of the previous claims in which this phase of keeping the process chamber in an anoxic atmosphere is carried out by keeping the process chamber in vacuum by means of a process gas extraction system and by arranging two sealed valves at the inlet and outlet of the process chamber.

13. Process according to one of the previous claims where said reactor comprises at least two independently heated sections passed successively by the shredded starting material, where the temperature of the first cross-section passed through is kept at a lower value than the pyrolysis temperature between 150°C and 250°C, preferably 200°C.

14. Process according to claim 13, in which that reactor comprises three crossed through sections in succession, in which
the temperature of the first section is maintained at a value between 150°C and 250°C, preferably 200°C,
the temperature of the second section is maintained at a value between 350°C and 500°C, preferably 400°C, and
the temperature of the third section is maintained at a value between 500°C and 650°C, preferably 600°C,
with a total residence time of the processed material between 10 minutes and 60 minutes, preferably equal to 30 minutes.

15. A process according to one of the previous claims, in which heating of the process chamber is obtained electrically and includes a step of conversion of the thermal and chemical energy of non-condensable gases into electrical energy by means of cogeneration for the electrical supply of the heating of the process chamber.
